(19) **Europäisches Patentamt**

**European Patent Office**

**Office européen des brevets**

(11) **EP 0 892 579 B1**

(12) **FASCICULE DE BREVET EUROPEEN**

(45) Date de publication et mention
de la délivrance du brevet:
**12.09.2001 Bulletin 2001/37**

(51) Int Cl.⁷: **H04Q 11/04**

(21) Numéro de dépôt: **98401750.9**

(22) Date de dépôt: **09.07.1998**

(54) **Procédés de transmission et de réception de cellules ATM à codage à taux variable et signal numérique correspondant**

Verfahren zum Senden und Empfangen von ATM-Zellen mit veränderlicher Codierungsrate und zugehörige Digitalsignale

Procedure for transmitting and receiving ATM cells with variable coding rate and corresponding digital signal

(84) Etats contractants désignés:
**DE ES GB IT**

(30) Priorité: **17.07.1997 FR 9709070**

(43) Date de publication de la demande:
**20.01.1999 Bulletin 1999/03**

(73) Titulaire: **ALCATEL**
**75008 Paris (FR)**

(72) Inventeur: **Sehier, Philippe**
**78100 Saint Germain en Laye (FR)**

(74) Mandataire: **Laroche, Danièle et al**
**Compagnie Financière Alcatel,**
**Intellectual Property Department,**
**30, avenue Kléber**
**75116 Paris (FR)**

(56) Documents cités:
**WO-A-97/16046         US-A- 5 648 969**

- AGNELLI S ET AL: "OPTIMISATION OF THE PHYSICAL LINK PERFORMANCE FOR ATM SATELLITE USER ACCESS" EUROPEAN CONFERENCE ON SATELLITE COMMUNICATIONS, MANCHESTER, NOV. 2 - 4, 1993, no. CONF. 3, 2 novembre 1993, pages 6-10, XP000457971 INSTITUTION OF ELECTRICAL ENGINEERS

**Description**

Le domaine de l'invention est celui de la transmission de données numériques, sous la forme de cellules ATM (pour "Asynchronous Transfert Mode" en langue anglaise ou Mode de Transfert Asynchrone), notamment dans des canaux de transmission non-stationnaires, perturbés et/ou bruités, pour des systèmes utilisant un mode d'Accès Multiple par Répartition de Codes (AMRC ou CDMA, pour "Coded Division Multiple Access" en langue anglaise). L'invention s'applique ainsi en particulier à la transmission de cellules par voie hertzienne, et par exemple dans le cadre d'applications mettant en oeuvre des satellites.

Les contraintes principales de ces types de système sont liées au fait que les ressources de transmission en puissance et en bande sont limitées. Les principes d'utilisation de ces ressources doivent donc être soigneusement étudiés de manière à permettre l'optimisation de la capacité du système.

La transmission de cellules ATM par voie radioélectrique présente une autre série de difficultés. En effet, le trafic ATM est par nature aléatoire (le nombre de cellules à traiter par seconde est variable), et doit être acheminé, sans introduction de retard excessif, sur une ressource de transmission qui a, par nature, une capacité fixe. L'invention décrite propose notamment une nouvelle méthode de transmission d'un débit variable aléatoirement, sur un support de transmission de capacité fixe.

En présence de tels canaux de transmission, il est nécessaire de faire appel à diverses techniques (code correcteur d'erreurs, embrouillage, entrelacement, étalement de spectre,...) permettant de pallier, au moins partiellement, les effets du canal et aux interférences causées par les autres utilisateurs de ce canal. L'utilisation de ces techniques induit bien sûr un accroissement de la complexité des moyens mis en oeuvre, tant à l'émission qu'à la réception.

Ainsi, dans le cas de la voie aller (station centrale vers terminaux) d'une communication satellitaire, il est actuellement proposé d'utiliser la forme d'onde O-CDMA.

Dans cette application, chaque satellite peut communiquer avec une pluralité de terminaux fixes ou mobiles. Une station centrale (ou "Gateway" en anglais) émet des trames de données, contenant chacune un nombre variable de cellules, destinées chacune à un terminal (ou à un ensemble de terminaux). Chaque cellule véhicule l'information à transmettre sous la forme d'un ensemble de bribes (ou "chips" en langue anglaise).

L'utilisation de systèmes à accès multiple par répartition de codes (AMRC), est bien connue, dans le cadre des applications dans lesquelles plusieurs terminaux, ou groupes de terminaux, doivent recevoir d'un même émetteur des données distinctes.

L'O-CDMA ("Orthogonal Code Division Multiple Access" en anglais, ou AMRC orthogonal) est une version particulière de cette technique dans laquelle l'interférence causée par les autres utilisateurs du canal est supprimée. Cet avantage est obtenu par l'utilisation de séquences d'étalement orthogonales et à la condition que les signaux soient rigoureusement synchronisés en temps et en fréquence.

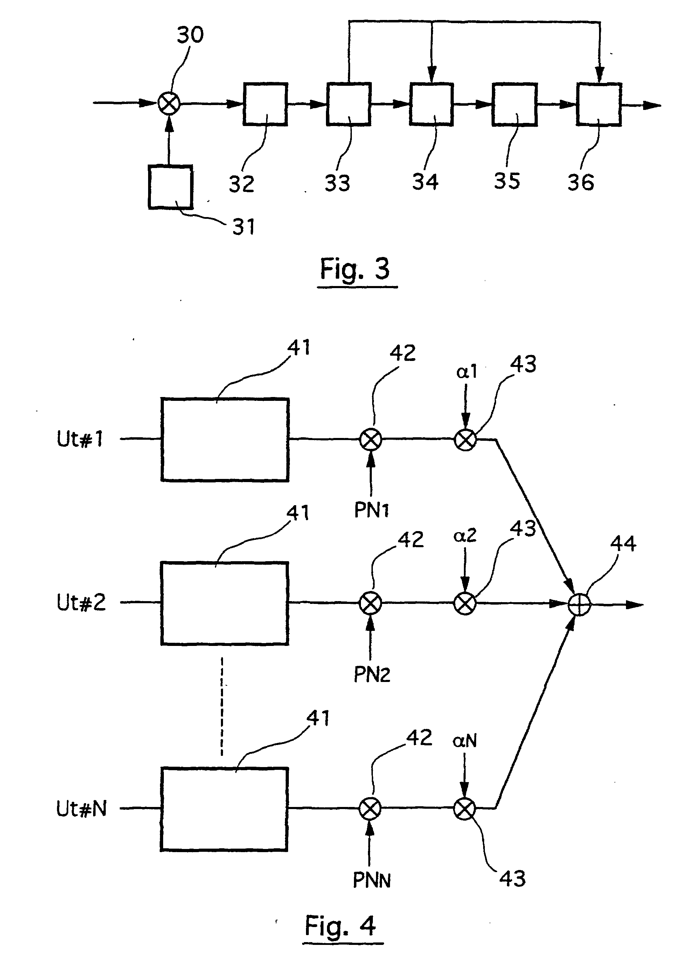

Selon cette technique illustrée en figure 4, on effectue les opérations suivantes:

- codage 41 de chaque trame (UT) ;
- multiplication 42 de la trame ainsi obtenue par une séquence d'étalement (PNi), orthogonale aux autres séquences utilisées (PNj), c'est-à-dire telle que :

$$\forall i, j \, et \, i \neq j \in \{1, 2, ..., N\}, \sum_{p=1}^{p=N} PNi(p) * PNj(p) = 0$$

où :

- N désigne le gain de traitement (c'est-à-dire le nombre de chips par symbole) ;
- Pni(k) désigne le kième élément de la ième séquence d'étalement.

afin de pouvoir retrouver à la réception la trame émise en multipliant le signal reçu par la séquence correspondante ;
- multiplication 43 de la trame ainsi obtenue par un coefficient de gain propre à chaque trame, afin d'ajuster individuellement les puissances à émettre pour chaque utilisateur;
- sommation 44 de toutes les trames ainsi obtenues pour constituer le signal à émettre.

Ainsi, un rapport signal à bruit suffisant peut être obtenu pour les terminaux destinataires situés dans des zones défavorisées.

Cette technique connue est relativement efficace, en termes de qualité du décodage. Toutefois, elle présente de nombreux inconvénients.

Tout d'abord, elle suppose un traitement complexe dans les terminaux, alors qu'il est fortement souhaitable que ceux-ci soient peu coûteux, et donc le plus simple possible. En effet, le terminal doit comprendre autant de corrélateurs qu'il y a de canaux à traiter (soit plusieurs dizaines dans l'exemple cité ci-dessus). Cela entraîne une architecture de démodulateur complexe et donc coûteuse.

Un autre inconvénient réside dans la puissance de calcul élevée nécessaire pour la démodulation. En effet, le nombre d'opérations nécessaire pour effectuer le désétalement d'un trame symbole est égal au produit du gain d'étalement par le nombre de séquences superposées (il peut être réduit dans le cas d'utilisation de séquence de Hadamard, notamment). Dans le cas de l'invention proposée, cette puissance de calcul est fortement réduite, car égale au gain d'étalement (indépendamment du nombre de symboles véhiculés par la trame).

En outre, cette forme d'onde présente un facteur de crête (rapport entre la puissance crête et la puissance moyenne du signal) élevé, et requiert donc un recul important de l'amplificateur de puissance. Cette caractéristique implique un surdimensionnement de l'amplificateur et donc, un surcoût des équipements.

Un autre inconvénient de cette technique connue est le temps de latence de transmission relativement important.

D'après le document WO97/16046 on connaît également un système de transmission hybride par fibre optique / câble coaxial. Dans ce système le dispositif fournit différent mode de trames prédéfinis que l'opérateur du système de communication peut choisir pour optimiser la transmission de données en fonctions de certaines conditions précises spécifiques au type de support de transmission. Cependant l'adaptation du mode de trame est statique et tient nécessairement compte du support de transmission.

L'invention a notamment pour objectif de pallier ces différents inconvénients de l'état de la technique.

Plus précisément, un premier objectif de l'invention est de fournir des procédés de transmission et de réception de cellules ATM via des canaux de transmission perturbés, correspondants par exemple à des transmissions satellitaires, qui permettent de réaliser des récepteurs simplifiés, sur le plan technique, et donc de coût de revient réduit.

Un autre objectif de l'invention est de fournir de tels procédés, qui offrent une bonne qualité de réception, sans nécessiter de traitements complexes et/ou inutiles.

Encore un autre objectif de l'invention est de fournir de tels procédés, optimisant l'utilisation des ressources de transmission disponibles.

L'invention a également pour objectif de fournir de tels procédés, qui optimisent indépendamment chaque communication, en fonction de critères spécifiques à chaque terminal et/ou à chaque communication.

Ces différents objectifs, ainsi que d'autres qui apparaîtront par la suite, sont atteints selon l'invention à l'aide d'un procédé de transmission de cellules ATM source pour des systèmes utilisant un mode d'accès multiples par répartition de codes, dans lequel :

- on alloue à chacune desdites cellules ATM source un nombre variable de bribes ;
- on adapte le codage de chacune desdites cellules ATM source en fonction du nombre de bribes qui lui est alloué.

Ainsi, l'invention propose un nouveau procédé de transmission de cellules ATM. Tout d'abord, on attribue un nombre variable de bribes à chaque cellule ATM, alors que jusqu'à présent le nombre de bribes était fixé. Ensuite, on accorde le codage de chaque cellule ATM avec le nombre de bribes attribué à ladite cellule ATM. Ceci permet ainsi d'optimiser le codage de chaque cellule, en fonction de divers critères.

Selon un mode de réalisation avantageux de l'invention, ledit nombre de bribes allouées à une cellule ATM source tient compte d'un bilan de liaison spécifique à la communication avec le terminal destinataire de ladite cellule ATM source (phénomènes de masquage de la station par des obstacles et atténuations de propagation).

Ceci permet notamment de coder chaque cellule ATM source en fonction des conditions de propagation de la communication avec le terminal destinataire de la cellule ATM source correspondant. Cela permet d'optimiser l'allocation des ressources.

Par ailleurs, la technique de l'invention permet de supprimer la pluralité de corrélateurs dans les démodulateurs actuels des terminaux du réseau associé.

Dans un mode de réalisation préférentiel de l'invention, dans lequel ladite transmission est effectuée sous forme de trames successives, comprenant chacune un même nombre de bribes, ledit nombre de bribes allouées à une cellule ATM source tient compte du nombre de cellules ATM source à transmettre dans la trame correspondante.

Ainsi, le nombre de bribes associées à une cellule ATM source est fonction du nombre de cellules à transmettre par la trame qui les véhicule. En effet, du fait de la variabilité du nombre de cellules de trame à trame à transporter, il est avantageux d'utiliser un principe de codage à taux variable permettant de transmettre chaque trame en un nombre fixe de bribes. Lorsque la trame contient peu de cellules, on exploite la place disponible pour mieux coder les cellules. On évite ainsi de transmettre "à vide", et on obtient une meilleure qualité de réception.

Selon une variante avantageuse, ledit nombre de bribes allouées à une cellule ATM source tient compte également des conditions climatiques de propagation du type de terminal et/ou du type de données à transmettre.

Ainsi, il est clair que cela permet d'attribuer une qualité de service (QOS) spécifiée à tous les terminaux du système quelle que soit les conditions de propagation.

Le principe de l'invention permet également d'adapter la QOS en fonction du type de service (voie, données,...).

De façon préférentielle, l'adaptation du codage de chacune desdites cellules ATM source est obtenue par :

- la mise en oeuvre d'un premier codage prédéterminé produisant une cellule mère ;
- la mise en oeuvre d'un code à répétition sur ladite cellule mère, produisant au moins une cellule fille.

De cette manière, il est aisé d'adapter à la place disponible, de façon très souple. Par ailleurs, le codage à répétition permet un décodage très simple par sommation des données répétées en fournissant une sortie pondérée. Un autre avantage de l'utilisation d'un code à répétition réside dans le fait de permettre son décodage avant la récupération de la porteuse. Ceci est effectivement avantageux étant donné le faible rapport du signal sur bruit sur les bribes lorsque l'on transmet peu de cellules dans la trame.

Dans ce cas, selon un mode de réalisation avantageux, la trame à transmettre comprend un en-tête, permettant entre autres d'indiquer les caractéristiques et paramètres desdites cellules filles produites.

Avantageusement, on peut de plus mettre en oeuvre un poinçonnage, sur au moins une desdites cellules filles.

Ainsi, on obtient une très grande flexibilité sur le taux de codage, permettant d'optimiser l'utilisation de la ressource de transmission.

L'un des buts de ce type de codage est de permettre une réduction du nombre de bribes allouées à la cellule avec une précision d'une unité. Par exemple, une trame de la forme d'onde selon la norme O-CDMA permet de transmettre de 0 à plusieurs dizaines cellules, le taux de codage est de 1 sur le nombre total de cellules. Un tel code peu par exemple, être obtenu par concaténation d'un code classique, de taux un demi par exemple et d'un code à répétition.

Par ailleurs, un tel code est équivalent en performance pour un canal gaussien à un code optimal de même longueur de contrainte et de taux 1 sur le nombre total de cellules.

Dans un mode de réalisation préférentiel de l'invention, chacune desdites trames comprend un descripteur de trame précisant notamment le nombre de bribes allouées à chacune desdites cellules.

Ainsi, un descripteur de trame permet de renseigner notamment le récepteur sur le nombre de bribes allouées à chaque cellule. Ce descripteur de trame peut également indiquer le nombre de cellules transmises par trame. Ce descripteur de trame est conçu de façon qu'il puisse être interprété sans connaissance du contenu de la trame proprement dite.

En outre, il est possible de réduire la taille de ce descripteur de trame, en prédéfinissant certains choix. Ainsi, on peut limiter, par exemple, le pas d'ajustage des puissances en transmettant toutes les cellules d'une classe (c'est à dire toutes les cellules qui sont destinées à des terminaux situés dans des zones où l'ensemble des stations nécessite sensiblement la même puissance d'émission des ondes à transmettre) à des positions prédéfinies dans la trame. De ce fait, le nombre de configurations de trames est ainsi limité au produit du nombre de classes par le nombre maximum de cellules.

Ou bien encore du fait que la quantité d'énergie à émettre par terminal évolue lentement, on peut éviter de transmettre l'information de puissance à chaque trame. En effet, la quantité d'énergie à émettre par terminal est fonction de la position du terminal et des conditions climatiques, qui induisent des fluctuations allant pour certains systèmes jusqu'à 1dB/s, lentes devant la durée des trames.

D'autres approches sont possibles, telles que celles limitant le contenu du descripteur de trames au nombre de cellules transmises dans la trame correspondante. Un procédé de ce type consiste, par exemple, à configurer l'émission en fonction du terminal du système le plus défavorisé.

Un autre procédé consiste à moduler en amplitude chaque cellule de la trame.

De façon avantageuse, ledit descripteur de trame est codé à l'aide d'un code correcteur spécifique, supérieur à celui mis en oeuvre pour lesdites cellules.

Ainsi, un haut niveau de protection du code correcteur sera garanti. En effet, il est essentiel de protéger ce descripteur de trame de façon très sûre, étant donné qu'il conditionne complètement la réception des données utiles.

Selon un mode de réalisation préférentiel de l'invention, ledit procédé de transmission comprend au moins une des étapes suivantes :

- entrelacement des bribes formant chacune desdites trames ;
- multiplication par une séquence d'embrouillage de chacune desdites trames.

Après le codage et l'assemblage desdites cellules dans la trame, il est en effet avantageux d'entrelacer les symboles, de façon à répartir aussi uniformément qu'il est possible, l'énergie relative à chaque symbole dans le temps, de manière à garantir entre autres un certain niveau de protection aux perturbations. Ledit entrelacement présente préférentiellement une profondeur égale à la durée totale de la trame.

Par ailleurs, afin de préserver de bonnes caractéristiques spectrales du signal émis, ainsi qu'un degré suffisant d'orthogonalité entre les zones de couverture (ou "spots" en langue anglaise) adjacentes d'un même système, on embrouille le signal avant de l'émettre.

Ainsi, chaque trame est de durée fixe et véhicule un nombre variable de cellules ATM auxquelles sont allouées un nombre de bribes fonction notamment de la communication à effectuer, du nombre de cellules à transmettre et des conditions climatiques de propagation.

Le signal à émettre possède ainsi une forme d'onde qui n'a pas d'influence sur les principes de multiplexage (Multiplexage à Répartition dans le Temps ou MRT ou TDM pour "Time Division Multiplex"en langue anglaise).

De façon avantageuse, ledit procédé de transmission comprend encore une étape de réglage du niveau de la puissance à transmettre, pour chacune desdites trames.

Ainsi, il est possible de régler le niveau de puissance à transmettre indépendamment d'une trame à l'autre. Cela permet de pallier aux insuffisances éventuelles de la dynamique de régulation de puissance cellule par cellule évoquée ci-dessus.

Selon une variante avantageuse de l'invention, ledit procédé de transmission utilise un modulation à enveloppe constante ou quasi-constante, peu sensible aux non-linéarités, qui permet donc d'utiliser les amplificateurs de puissance au maximum de leur rendement.

Selon une variante avantageuse de l'invention, la vitesse de modulation desdites bribes est constante, de façon que ladite vitesse de modulation desdites bribes soit indépendante du nombre de cellules à transmettre dans la trame véhiculant lesdites cellules.

Ainsi, il convient de noter que ledit procédé nécessite uniquement, quelles que soient les caractéristiques de la trame, la mise en oeuvre d'un pilotage par l'intermédiaire d'une horloge, beaucoup plus simple qu'un procédé nécessitant la mise en oeuvre d'un pilotage via un oscillateur commandé en tension (ou "Voltage Controlled Output" en langue anglaise).

Ledit procédé de transmission peut notamment être mis en oeuvre pour la voie aller d'une communication par satellite.

Ainsi, ce procédé de transmission peut servir notamment à transmettre à partir d'une station de base des cellules ATM par l'intermédiaire d'un satellite à l'attention de terminaux fixes.

Par ailleurs, l'invention concerne également un procédé de réception de cellules ATM transmises selon le procédé de transmission décrit ci-dessus, ledit procédé de réception comprenant les étapes suivantes :

- détermination du nombre de bribes allouées à chacune desdites cellules ;
- décodage, fonction dudit nombre de bribes, desdites cellules.

Le décodage de chaque cellule est donc adaptatif, et fonction notamment de la configuration de chaque trame, qui peut être notamment fournie par le descripteur de trame.

Dans le cas où le codage comprend la mise en oeuvre d'un code à répétition, associant au moins une cellule fille à une cellule mère, ledit décodage correspondant comprend la sommation de ladite cellule mère et de la ou desdites cellules filles correspondantes.

Ainsi, chaque trame transmise a une durée fixe et comprend un nombre variable de cellules ATM. Des cellules ATM filles sont obtenues par répétition et poinçonnage des symboles des cellules mères.

Cette répétition et ce poinçonnage sont entre autres fonction du bilan de liaison mesuré dans la station de base. Par exemple, si 21 bribes sont allouées à une cellule mère de 5 symboles (préférentiellement codés de manière convolutive), le codage fournit une cellule fille de 4 symboles répétés 4 fois et d'un symbole répété 5 fois. Il est clair que la différence du nombre de bribes par cellule (l'homme du métier parle alors de granularité) peut être supérieure à une bribe.

De cette manière, lors du décodage correspondant, les bribes allouées à chaque cellule sont sommées, de manière à augmenter l'énergie du signal reçu. Par exemple, en reprenant l'exemple précédent, une répétition d'un symbole par 4 permet un gain en puissance de 6 dB.

Selon un mode préférentiel de l'invention, ledit procédé de réception comprend une étape de récupération de porteuse, mise en oeuvre après ledit décodage du code à répétition.

En d'autres termes, il est avantageux de permettre le décodage dudit code à répétition avant de récupérer la porteuse, étant donné le faible rapport signal sur bruit sur les bribes lorsque l'on transmet peu de cellules dans la trame.

Ainsi, il est possible d'opérer avec un signal dont le rapport signal sur bruit est exploitable, de manière à récupérer la porteuse par exemple.

L'invention concerne également le signal mis en oeuvre dans les procédés décrits ci-dessus. Un tel signal est avantageusement organisé en trame comprenant un nombre prédéterminé de bribes. Le nombre de bribes allouées à chaque trame est fixe. La répartition d'un nombre de bribes à chaque cellule de la trame est variable, en fonction du nombre de cellules à transporter, et le cas échéant de différents autres critères.

D'autres caractéristiques et avantages de l'invention apparaîtront à la lecture de la description suivante d'un mode de réalisation préférentiel de l'invention, donné à titre d'exemple indicatif et non limitatif et des dessins annexés, dans lesquels :

- la figure 1 présente un exemple de trame du signal numérique selon l'invention ;
- la figure 2 illustre un synoptique d'un mode de réalisation particulier du procédé de transmission de cellules ATM source selon l'invention ;
- la figure 3 illustre un synoptique d'un mode de réalisation particulier du procédé de réception de cellules ATM selon l'invention ;
- la figure 4, déjà discutée en préambule, présente le principe général de la technique O-CDMA.

Le mode de réalisation décrit ci-dessous concerne donc un procédé permettant de transmettre par l'intermédiaire d'un satellite des cellules selon la norme ATM à codage à taux variable à partir d'une station de base dédiées à des terminaux fixes et identifiés.

L'invention concerne également le signal numérique créé selon ce procédé. Ce signal numérique est formé de trames successives, chaque trame étant constituée de différentes cellules. Chaque cellule comprend des symboles. Chaque symbole est représenté par des bribes.

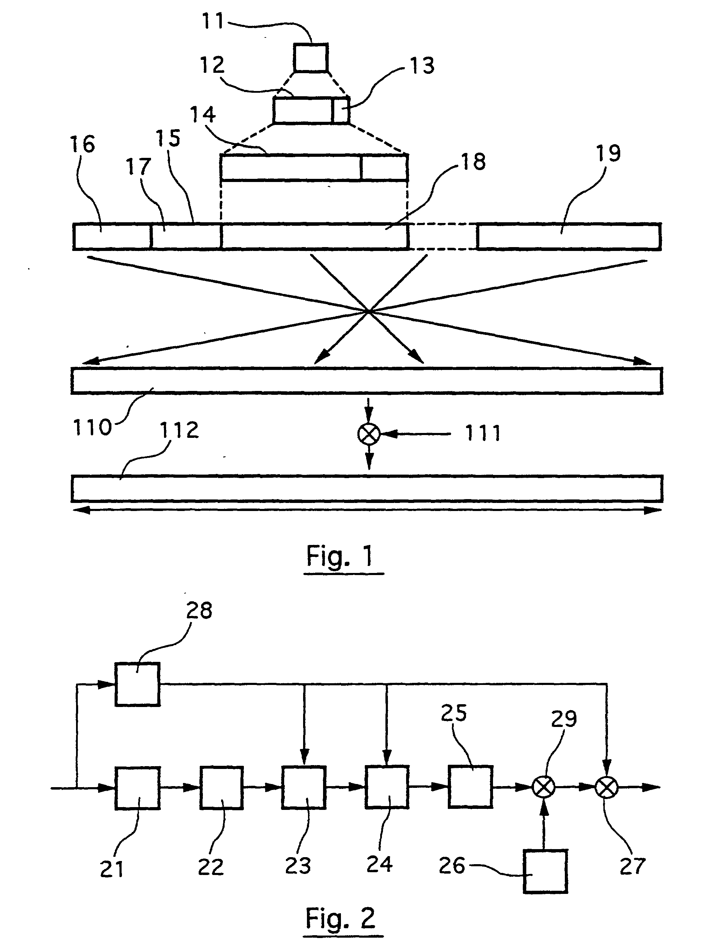

La construction d'une trame est présentée à titre d'exemple sur la figure 1.

La cellule ATM source 11 est codée, pour former la cellule 12 (dite cellule mère) à laquelle on ajoute une "queue" 13. A partir de cette cellule constituée des parties 12 et 13, on forme un bloc 14 formé de cellule fille (répétition de la cellule mère), qui subissent éventuellement un poinçonnage.

L'utilisation d'un code de taux fixe suivi d'un poinçonnage à taux variable permet d'obtenir la flexibilité requise sur le taux de codage.

Un tel code peut être obtenu par concaténation d'un code classique de taux un demi par exemple et d'un code à répétition. L'utilisation d'un tel code à répétition permet d'effectuer son décodage avant la récupération de porteuse. Cela est avantageux étant donné le faible rapport signal sur bruit sur les bribes lorsque l'on transmet peu de cellules dans la trame.

Pour constituer une trame 15, on insère en tête de cette trame un préambule 16 qui contient un descripteur de trame. Il indique par exemple le début et/ou la longueur de chaque cellule, le taux de codage,... puis, on assemble les cellules codées 17, 18, 19.

Les symboles constitutifs de cette trame subissent ensuite un entrelacement pour aboutir à une trame entrelacée 110, dans laquelle on a réparti aussi uniformément que possible l'énergie relative à chaque symbole dans le temps, afin de garantir un certain niveau de résistance aux perturbations de nature impulsionnelles (correspondant par exemple aux perturbations "interspot").

Ensuite, le signal est embrouillé avant d'être émis. On multiplie la trame 110 par une séquence d'embrouillage 111, qui est différente selon le terminal destinataire.

Ainsi, on obtient la trame à émettre 112 qui possède de bonnes caractéristiques spectrales pour le signal à émettre et un degré certain d'orthogonalité entre zones de couvertures (ou "spots" en langue anglaise) adjacentes à atteindre.

Un tel signal est généré par le procédé de transmission tel qu'illustré à titre d'exemple sur le synoptique de la figure 2.

L'invention concerne également le procédé de transmission des cellules ATM.

Tout d'abord, on détermine le nombre de cellules à transmettre dans la trame, ainsi que les puissances associées. Puis, on partage l'énergie allouée à chaque cellule à partir des informations fournies par la régulation de puissance. Ensuite, on détermine le niveau de puissance à transmettre, qui reste d'ailleurs constant sur toute la durée de la trame.

On traite chaque cellule ATM d'une trame en lui faisant suivre, par exemple, la succession des étapes suivantes (on en déduit directement la structure du dispositif correspondant) :

- codage 21, produisant une cellule mère ;
- répétition 22 du ou des symboles de la cellule mère pour créer des cellules filles;
- poinçonnage 23 des cellules, pour adapter le nombre de bribes ;
- insertion 24 d'un préambule en série avec les bribes codées relatives à chaque cellule ;
- entrelacement 25 des cellules, avec une profondeur égale à la durée totale de la trame;
- génération 26 d'une séquence d'embrouillage qui est fonction notamment de l'endroit où se situe le terminal vers lequel on émet cette trame que l'on multiplie (29) par la trame issue de l'entrelacement ;

- transmission de la trame ainsi constituée en commandant le niveau de puissance 27 à associer à la trame à émettre en fonction de l'analyse 28 de la configuration de la trame.

L'analyse 27 de la configuration de la trame à émettre influe en outre sur le poinçonnage 23 ainsi que, bien sûr, sur la définition et sur l'insertion d'un préambule de l'étape 24.

L'invention concerne en outre le procédé de réception de cellules ATM transmises selon ce dernier procédé de transmission.

Comme présenté à titre d'exemple sur le synoptique de la figure 3, le procédé de réception de cellules ATM comprend les étapes successives suivantes de la figure 3 :

- multiplication 30 du signal reçu par une séquence précise issue du générateur de séquences 31 pour "désembrouiller" le signal reçu;
- désentrelacement 32 de la trame ainsi obtenue ;
- extraction 33 du préambule de la trame;
- on décode le code à répétition, qui est poinçonné, en l'étape 34. Le traitement de cette étape 34 consiste à effectuer des opérations d'intégration et de vidage (ou "integrate and dump" en langue anglaise) d'un nombre variable d'échantillons, en fonction notamment de la configuration de trame fournie par exemple par le descripteur de trame. Cette sommation 34 des bribes allouées aux cellules filles, permet d'augmenter l'énergie du signal reçu et donc de gagner en puissance, afin d'opérer par la suite avec un signal dont le rapport signal sur bruit soit exploitable ;
- récupération 35 de la porteuse du signal après avoir traité le signal de manière à pouvoir l'exploiter ;
- décodage 36 des cellules de la trame ainsi obtenue, de manière à en extraire les informations d'origine.

**Revendications**

1. Procédé de transmission de cellules ATM source (11) pour des systèmes utilisant un mode d'accès multiples par répartition de codes, **caractérisé en ce que** :

   - on alloue à chacune desdites cellules ATM source (11) un nombre variable de bribes (12 ; 14) ;
   - on adapte (23) le codage (21 ; 22) de chacune desdites cellules ATM source (11) en fonction du nombre de bribes qui lui est alloué.

2. Procédé selon la revendication 1, **caractérisé en ce que** ledit nombre de bribes allouées (12 ; 14) à une cellule ATM source (11) tient compte d'un bilan de liaison spécifique à la communication avec le terminal destinataire de ladite cellule ATM source.

3. Procédé selon l'une quelconque des revendications 1 et 2, **caractérisé en ce que** ladite transmission est effectuée sous forme de trames successives (15 ; 112), comprenant chacune un même nombre de bribes,
   et en ce que ledit nombre de bribes allouées à une cellule ATM source tient compte du nombre de cellules ATM source à transmettre dans la trame correspondante (112).

4. Procédé selon l'une quelconque des revendications 1 à 3, **caractérisé en ce que** ledit nombre de bribes allouées à une cellule ATM source (11) tient compte des conditions climatiques de propagation et/ou de type de terminal destinataire de ladite cellule et/ou du type d'information contenue dans ladite cellule.

5. Procédé selon l'une quelconque des revendications 1 à 4, **caractérisé en ce que** l'adaptation (23) du codage de chacune desdites cellules ATM source (11) est obtenue par :

   - la mise en oeuvre d'un premier codage prédéterminé (21) produisant une cellule mère ;
   - la mise en oeuvre d'un code à répétition (22) sur ladite cellule mère, produisant au moins une cellule fille.

6. Procédé selon la revendication 5, **caractérisé en ce que** l'on met en oeuvre un poinçonnage (23) sur au moins une desdites cellules filles.

7. Procédé selon l'une quelconque des revendications 3 à 6, **caractérisé en ce que** chacune desdites trames comprend un descripteur de trame (16) précisant notamment le nombre de bribes allouées à chacune desdites cellules (11).

**8.** Procédé selon la revendication 7, **caractérisé en ce que** ledit descripteur de trame (16) est codé à l'aide d'un code correcteur spécifique, supérieur à celui mis en oeuvre pour lesdites cellules (11).

**9.** Procédé selon l'une quelconque des revendications 3 à 7, **caractérisé en ce qu'**il comprend au moins une des étapes suivantes :

- entrelacement (25) des bribes formant chacune desdites trames ;
- multiplication (29) par une séquence d'embrouillage (26) de chacune desdites trames (15).

**10.** Procédé selon l'une quelconque des revendications 3 à 9, **caractérisé en ce qu'**il comprend une étape de réglage du niveau de la puissance (27) à transmettre, pour chacune desdites trames (112).

**11.** Procédé selon l'une quelconque des revendications 1 à 10, **caractérisé en ce qu'**il comprend une étape de modulation à enveloppe constante ou quasi-constante.

**12.** Procédé selon l'une quelconque des revendications 1 à 11, **caractérisé en ce que** la vitesse de modulation desdites bribes est constante.

**13.** Procédé selon l'une quelconque des revendications 1 à 12, **caractérisé en ce qu'**il est mis en oeuvre pour la voie aller d'une communication par satellite.

**14.** Procédé de réception de cellules ATM transmises selon le procédé de l'une quelconque des revendications 1 à 13, **caractérisé en ce qu'**il comprend les étapes suivantes :

- détermination du nombre de bribes allouées à chacune desdites cellules;
- décodage (34), fonction dudit nombre de bribes, desdites cellules.

**15.** Procédé selon la revendication 14, **caractérisé en ce que**, le codage comprenant la mise en oeuvre d'un code à répétition (14), associant au moins une cellule fille à un cellule mère, le décodage correspondant comprend la sommation (34) de ladite cellule mère et de la ou desdites cellules filles correspondantes.

**16.** Procédé selon la revendication 15, **caractérisé en ce qu'**il comprend une étape de récupération (35) de porteuse, mise en oeuvre après ledit décodage (34) du code à répétition (14).

**17.** Signal numérique portant des cellules ATM destinées à être transmises dans des canaux de transmission utilisant un mode d'accès multiple à répartition de codes, et à être reçues par au moins un récepteur, **caractérisé en ce que** lesdites cellules ATM sont codées à l'aide d'un codage adaptatif (12) et (14), fonction d'un nombre de bribes variable qui leur a été allouées, et regroupées en trames de taille fixe.

**Claims**

**1.** A method of transmitting source ATM cells (11) for systems using a code division multiple access mode, said method being **characterized in that**:

a variable number of chips (12; 14) are allocated to each of said source ATM cells (11); and
the encoding (21; 22) of each of said source ATM cells (11) is adapted as a function of the number of chips allocated to it.

**2.** A method according to claim 1, **characterized in that** said number of chips (12; 14) allocated to a source ATM cell (11) takes into account a link assessment specific to the call with the terminal to which said source ATM cell is addressed.

**3.** A method according to claim 1 or 2, **characterized in that** said transmission takes place in the form of successive frames (15; 112), each of which contains the same number of chips; and in that said number of chips allocated to a source ATM cell takes into account the number of source ATM cells to be transmitted in the corresponding frame (112).

4. A method according to any one of claims 1 to 3, **characterized in that** said number of chips allocated to a source ATM cell (11) takes account of the climatic conditions of propagation and/or of the type of terminal to which said cell is addressed and/or of the type of information contained in said cell.

5. A method according to any one of claims 1 to 4, **characterized in that** the encoding of each of said source ATM cells (11) is adapted (23) by:

implementing first predetermined encoding (21), thereby producing a mother cell; and
implementing a repetition code (22) on said mother cell, thereby producing at least one daughter cell.

6. A method according to claim 5, **characterized in that** puncturing (23) is implemented on at least one of said daughter cells.

7. a method according to any one of claims 3 to 6, **characterized in that** each of said frames contains a frame descriptor (16) specifying, in particular, the number of chips allocated to each of said cells (11).

8. A method according to claim 7, **characterized in that** the frame descriptor (16) is encoded by means of a specific corrector code higher than the code implemented for said cells (11).

9. A method according to any one of claims 3 to 7, **characterized in that** it comprises at least one of the following steps:

interleaving (25) the chips forming each of said frames; and
multiplying (29) each of said frames (15) by a scrambling sequence (26).

10. A method according to any one of claims 3 to 9, **characterized in that** it further comprises a step of adjusting the power level (27) to be transmitted, for each of said frames (112).

11. A method according to any one of claims 1 to 10, **characterized in that** it further includes a step of performing modulation of constant or almost constant envelope.

12. A method according to any one of claims 1 to 11, **characterized in that** the speed of modulation of said chips is constant.

13. A method according to any one of claims 1 to 12, **characterized in that** it is implemented for the go path of a satellite call.

14. A method of receiving ATM cells transmitted using the method of any one of claims 1 to 13, the method of receiving ATM cells being **characterized in that** it comprises the following steps:

determining the number of chips allocated to each of said cells; and
decoding (34) said cells as a function of said number of chips.

15. A method according to claim 14, **characterized in that**, with the encoding comprising implementing a repetition code (14) associating at least one daughter cell with a mother cell, the corresponding decoding comprises summing (34) said mother cell and the corresponding daughter cell(s).

16. A method according to claim 15, **characterized in that** it further comprises a carrier recovery step (35) implemented after said decoding (34) of the repetition code (14).

17. A digital signal carrying ATM cells that are to be transmitted in transmission channels using a code distribution multiple access mode, and to be received by at least one receiver, said digital signal being **characterized in that** said ATM cells are encoded by means of adaptive encoding (12 and 14) which is adapted as a function of a variable number of chips allocated to each of them, and they are grouped together in frames of fixed size.

**Patentansprüche**

1. Verfahren zur Übertragung von ATM-Quellzellen (11) für Systeme, die einen Codemultiplex-Vielfachzugriffsmodus verwenden, **dadurch gekennzeichnet, dass**:

   - jeder dieser ATM-Quellzellen (11) eine variable Anzahl von Chips (12; 14) zugeordnet wird;
   - die Codierung (21; 22) jeder dieser ATM-Quellzellen (11) in Abhängigkeit von der ihr zugeteilten Zahl von Chips angepasst (23) wird.

2. Verfahren nach Anspruch 1, **dadurch gekennzeichnet, dass** die Zahl von einer ATM-Quellzelle (11) zugeteilten Chips (12; 14) eine spezifische Verbindungsbilanz der Kommunikation mit dem EmpfängerEndgerät der ATM-Quellzelle berücksichtigt.

3. Verfahren nach einem beliebigen der Ansprüche 1 und 2,
   **dadurch gekennzeichnet, dass** die Übertragung in Form aufeinanderfolgender Rahmen (15; 112) durchgeführt wird, die jeweils eine gleiche Zahl von Chips enthalten,
   und dass die Anzahl von einer ATM-Zelle zugeteilten Chips die Zahl von in dem entsprechenden Rahmen (112) zu übertragenden ATM-Zellen berücksichtigt.

4. Verfahren nach einem beliebigen der Ansprüche 1 bis 3,
   **dadurch gekennzeichnet, dass** die Zahl von einer ATM-Quellzelle (11) zugeteilten Chips die klimatischen Ausbreitungsbedingungen und/oder den Typ von Empfängerendgerät der Zelle und/oder den Typ von in der Zelle enthaltener Information berücksichtigt.

5. Verfahren nach einem beliebigen der Ansprüche 1 bis 4,
   **dadurch gekennzeichnet, dass** die Anpassung (23) der Codierung jeder der ATM-Zellen (11) erhalten wird durch:

   - die Anwendung einer ersten vorgegebenen Codierung (21), die eine Mutterzelle ergibt;
   - die Anwendung eines Wiederholungscodes (22) auf die Mutterzelle, die mindestens eine Tochterzelle ergibt.

6. Verfahren nach Anspruch 5, **dadurch gekennzeichnet, dass** eine Punktierung (23) an wenigstens einer der Tochterzellen vorgenommen wird.

7. Verfahren nach einem beliebigen der Ansprüche 3 bis 6,
   **dadurch gekennzeichnet, dass** einer der Rahmen einen Rahmendescriptor (16) umfasst, der insbesondere die Zahl von jeder der Zellen (11) zugeteilten Chips spezifiziert.

8. Verfahren nach Anspruch 7, **dadurch gekennzeichnet, dass** der Rahmendescriptor (16) mit Hilfe eines spezifischen Korrekturcodes codiert ist, der stärker als der für die anderen Zellen (11) angewendete ist.

9. Verfahren nach einem beliebigen der Ansprüche 3 bis 7,
   **dadurch gekennzeichnet, dass** es wenigstens einen der folgenden Schritte umfasst:

   - Verschachtelung (25) der Chips, die jeden der Rahmen bilden;
   - Multiplizieren (29) jedes der Rahmen (15) mit einer Verwürfelungsfolge (26).

10. Verfahren nach einem beliebigen der Ansprüche 3 bis 9,
    **dadurch gekennzeichnet, dass** es einen Schritt des Regelns des Sendeleistungsniveaus (27) für jeden der Rahmen (112) umfasst.

11. Verfahren nach einem beliebigen der Ansprüche 1 bis 10, **dadurch gekennzeichnet, dass** es einen Schritt des Modulierens mit konstanter oder quasikonstanter Umhüllender umfasst.

12. Verfahren nach einem beliebigen der Ansprüche 1 bis 11, **dadurch gekennzeichnet, dass** die Modulationsgeschwindigkeit der Chips konstant ist.

13. Verfahren nach einem beliebigen der Ansprüche 1 bis 12, **dadurch gekennzeichnet, dass** es für den Hinweg einer Satellitenkommunikation eingesetzt wird.

**14.** Verfahren zum Empfangen von nach einem Verfahren nach einem beliebigen der Ansprüche 1 bis 13 übertragenen ATM-Zellen, **dadurch gekennzeichnet, dass** es die folgenden Schritte umfasst:

- Bestimmen der Anzahl von jeder der Zellen zugeteilten Chips;
- Decodieren (34) der Zellen in Abhängigkeit von der Zahl von Chips.

**15.** Verfahren nach Anspruch 14, **dadurch gekennzeichnet, dass** wenn die Codierung die Anwendung eines Wiederholungscodes (14) umfasst, der wenigstens eine Tochterzelle zu einer Mutterzelle zuordnet, die entsprechende Decodierung die Summation (34) der Mutterzelle und der entsprechenden Tochterzelle(n) umfasst.

**16.** Verfahren nach Anspruch 15, **dadurch gekennzeichnet, dass** es einen Schritt der Trägerwiedergewinnung (35) umfasst, der nach der Decodierung (34) des Wiederholungscodes (14) angewendet wird.

**17.** Digitales Signal, das ATM-Zellen trägt, die zur Übertragung auf Übertragungskanälen bestimmt sind, die einen Vielfachzugriffsmode im Codemultiplex verwenden, und von wenigstens einem Empfänger empfangen zu werden, **dadurch gekennzeichnet**, dase die ATM-Zellen mit Hilfe einer adaptiven Codierung (12) und (14) codiert werden, die abhängig von einer ihnen zugeteilten variablen Zahl von Chips ist, und in Rahmen von fester Größe zusammengefasst werden.

Fig. 1

Fig. 2

Fig. 3

Fig. 4

13